(19) Europäisches Patentamt
European Patent Office
Office européen des brevets

(11) Publication number : **0 641 829 A2**

(12) **EUROPEAN PATENT APPLICATION**

(21) Application number : **94306376.8**

(22) Date of filing : **30.08.94**

(51) Int. Cl.[6] : **C08L 83/04,** C08L 71/02

(30) Priority : **04.09.93 GB 9318384**
**29.10.93 GB 9322367**

(43) Date of publication of application :
**08.03.95 Bulletin 95/10**

(84) Designated Contracting States :
**BE DE FR GB IT NL**

(71) Applicant : **DOW CORNING S.A.**
**Parc Industriel**
**B-7180 Seneffe (BE)**

(72) Inventor : **Leempole, Patrick**
**Avenue Dolez 500**
**B-1180 Brussels (BE)**
Inventor : **Lloyd, Norman Christopher**
**Rue du Cortil Bailly 20**
**B-1382 Lasnes (BE)**

(74) Representative : **Bullows, Michael**
**Dow Corning Limited,**
**Cardiff Road**
**Barry, South Glamorgan CF63 2YL, Wales (GB)**

(54) **Curable compositions.**

(57) Novel filled curable compositions comprise a mixture and or a reaction product of hydroxypolyorganosiloxane, an organic polymer having oxyalkylene units in its molecular chain and at least two reactive groups - $SiR_{(3-b)}X_b$ in which R represents a divalent hydrocarbon group, X represents an alkoxy, alkenyloxy or oximo group and (b) has the value 0, 1 or 2. The compositions may be used as moisture curable sealants which are to provide an elastomeric seal having improved paintability.

EP 0 641 829 A2

This invention is concerned with curable compositions and is particularly concerned with silicone based curable compositions useful as sealant compositions.

Curable siloxane compositions have for many years been employed in a variety of applications. One type of curable siloxane composition has the ability to cure to an elastomer at normal ambient or slightly elevated temperatures, either spontaneously on mixing the components or as a result of exposure to moisture. Such compositions are generally termed room temperature vulcanisable (or RTV's) and they have been formulated into sealant materials having excellent physical properties, adhesion to substrates and weatherability. Commercially available silicone based RTV's include those derived from an organosiloxane polymer having silanol groups and (i) a silane having at least 3 silicon-bonded oxime groups (such compositions are described for example in U.K. Patents 975 603, 990 107 and U.S. 3,184,427) or (ii) a silane having at least three alkoxy groups or (iii) a silane having at least 3 silicon-bonded acyloxy groups per molecule (such compositions are described for example in U.K. Patents 862 576, 894 758, 920 036, U.S. 3,077,465 and U.S. 3,061,575). These silicone based RTV's cure readily in presence of atmospheric moisture at ambient temperatures and provide useful seals in many applications. In general, such sealant compositions demonstrate good resistance to degradation by the elements and are not readily wetted by water. Such properties have rendered the materials particularly suitable for use in the construction industry, for example in the sealing of horizontal or vertical joints in walls and masonary structures and in the sealing of glazed units to masonary. Whilst the combination of properties provided by such compositions is highly desirable for many applications, it is desirable to provide materials with an acceptable blend of properties at lower cost. Attempts to incorporate proportions of inorganic fillers or organic extenders have generally been restricted to the use of comparatively small proportions of the materials.

For many sealant applications compositions which cure to a lower modulus are preferred. Numerous ways have been proposed to produce room temperature vulcanisable silicone based sealant compositions which cure to provide elastomeric seals of low modulus, for example by incorporation of extenders or plasticisers. Plasticisers commonly used in silicone based sealants include the liquid triorganosilyl end blocked polydimethylsiloxanes which tend to exude from the composition and may reduce paintability or paint retention of the surface. It is also known to incorporate small proportions of organic materials (e.g. phthalate esters and polyethers) in silicone based room temperature vulcanisable sealant compositions as plasticisers or in order to promote desired properties in the composition before or after cure. However, it is unusual to attempt to incorporate more than a few parts of these materials per hundred parts by weight of the silicone polymer for fear of encountering miscibility problems and exudation of the organic polymer or plasticiser from the silicone.

For example, G.B. 2 072 208 (U.S. 4,261,758) discloses a base material for a room temperature vulcanisable silicone rubber composition with sag control which comprises (A) 100 parts by weight of a silanol endstopped polydiorganosiloxane of a viscosity from 500 to 1,000,000 centipoise at 25°C (B) at least 3 parts of fumed silica (C) from 0.3 to 2.0 parts by weight of a polyether having a molecular weight from 300 to 2000 selected from a specified group, and (D) from 0.13 to 5 parts by weight of a low molecular weight silanol terminated dimethyl polysiloxane having a viscosity from 5 to 1000 centipoise at 25°C. The base material is curable with atmospheric moisture in presence of a catalyst and a tri-acyloxy silane. The specification recommends the use of a plasticiser in the composition, for example a triorganosilyl end-stopped diorganopolysiloxane of 10 to 5000 centipoise at 25°C. It is apparent that the polyether referred to is employed in very small proportions as a "sag-control" agent in order to enable use of lowered proportions of fumed silica and so reduce cost of the composition and also to permit preparation of lower modulus sealants.

U.S. 4,537,944 is directed to a room temperature curable polyorganosiloxane composition comprising (A) 100 parts by weight in total of (1) a polydiorganosiloxane of the general formula $R_a^1(R^2O)_{(3-a)}SiO-(R_2SiO)_n-Si(OR^2)_{(3-a)}R_a^1$ wherein R and $R^1$ are the same or different and represent a monovalent substituted or unsubstituted hydrocarbon group, $R^2$ represents a monovalent group selected from the group consisting of alkyl groups having 1 to 4 carbon atoms and alkoxyalkyl groups having 1 to 6 carbon atoms in total, a represents a number of 0 or 1 and n represents a number for controlling the viscosity of (a) from 100 to 500,000 cP at 25°C and (2) a silane of the general formula $R_b^3Si(OR^4)_{4-b}$, wherein $R^3$ represents a monovalent substituted or unsubstituted hydrocarbon group, $R^4$ represents a monovalent group selected from the group consisting of alkyl groups having 1 to 4 carbon atoms and alkoxyalkyl groups having 1 to 6 carbon atoms in total, b represents a number of 0 or 1 or a partially hydrolysed condensate thereof, with the proviso that the amount of (A) (1) is 85 to 100% based on the total of (A) (1) and (A) (2); (B) 0.01 to 10 parts by weight of a curing catalyst; (C) 0.5 to 10 parts by weight of a nitrogen-containing silicon compound in which the nitrogen atom is bonded with a silicon atom through one or more carbon atoms and said nitrogen atom is further bonded directly with said silicon atom or another silicon atom; and (D) 0.05 to 50 parts by weight of a polyoxyalkylene chain containing compound. The polyoxyalkylene chain containing compound is principally intended in this case to prevent resinification of the surface of the cured composition and is preferably used in proportions of 0.05 to 10 parts by

weight of the component (A).

It is one of the various objects of the present invention to provide an improved curable composition.

We have now found that silicone based room temperature vulcanisable compositions which cure through the action of atmospheric moisture and are suitable for use as sealant compositions to provide low modulus elastomeric seals, may comprise a polyether based organic polymer which has been modified to incorporate one or more silyl groups having oximo or alkoxy groups attached thereto.

The invention provides in one of its aspects a composition capable of crosslinking in presence of moisture from the atmosphere comprising a mixture or a reaction product of (A) 100 parts by weight of a polyorganosiloxane having a viscosity in the range 150 to 500,000 mPa.s at 25°C comprising units of the general formula $R_aSio_{(\frac{3-a}{2})}$ and not less than two units of the general formula $(HO)_bSiR_cO_{(\frac{3-(b+c)}{2})}$, (B) from 55 to 300 parts by weight of an organic polymer having oxyalkylene units in its molecular chain and not less than two groups -$SiR_{(3-b)}X_b$, (C) from 0 to 25 parts by weight of one or more silanes of the general formula $X'_dSiR_{(4-d)}$, (D) a catalyst for promoting condensation reaction between the components (A), (B) and (C) in presence of moisture from the atmosphere selected from the group consisting of titanium complexes and tin compounds wherein each R is the same or different and is a monovalent hydrocarbon group, X is selected from the group consisting of alkoxy, alkoxyalkoxy, alkenyloxy and oximo, X' is a hydrolysable group, a has the value 0, 1, 2 or 3, b has the value 1, 2 or 3, c has the value 0, 1 or 2 and d has the value 2, 3 or 4.

In a composition according to the invention, the polyorganosiloxane (A) has a viscosity in the range from 150 to 500,000 mPa.s at 25°C and comprises units of the formula $R_aSiO_{(\frac{3-a}{2})}$ and not less than two units of the formula $(HO)_bSiR_cO_{(\frac{3-(b+c)}{2})}$ . Preferred materials have a viscosity greater than 50,000 mPa.s and preferably less than about 150,000 mPa.s; materials of higher viscosity e.g. of about 350,000 mPa.s or more may be employed but generally their use requires the presence of a plasticiser in the composition. The polyorganosiloxane (A) may be linear or branched and may comprise a mixture of two or more such materials. Preferred materials are at least substantially linear i.e. a is predominantly 2. The hydrocarbon substituents R attached to the silicon atoms are preferably selected from alkyl groups having from 1 to 10 carbon atoms, for example methyl, propyl, hexyl and decyl, alkenyl groups having from 2 to 8 carbon atoms, for example vinyl, allyl and hexenyl, and aryl, alkaryl and aralkyl groups having from 6 to 8 carbon atoms, for example phenyl, tolyl and phenylethyl. At least 30 percent of the total R substituents should be methyl. Preferred from an economic standpoint are polydiorganosiloxanes in which substantially all of the silicon-bonded substituents are methyl. The units of the general formula $(HO)_bSiR_cO_{(\frac{3-(b+c)}{2})}$ which provide means whereby the desired room temperature curing can be effected, are normally terminal units of the polyorganosiloxane. The preferred materials are $\alpha,\omega$ dihydroxy polydiorganosiloxanes in which case a and c are 2, and b is 1.

In a composition according to the invention, the organic polymer (B) having oxyalkylene units in its molecular chain and not less than two groups -$SiR_{(3-b)}X_b$ (R, X and b are as aforesaid) may be linear or branched and may have two, three or more groups -$SiR_{(3-b)}X_b$ per molecule and thus may be capable of formation of two or three or more siloxane linkages and so serve as an end cap, chain extender or as a cross-linker. The organic polymer (B) may be chosen from numerous known materials or may be one of the novel materials hereinafter described. The organic polymer may have a molecular chain Z which includes in or on the chain not only oxyalkylene units but also units or linkages including carbon, oxygen, hydrogen, nitrogen, silicon or sulphur. The chain Z may be attached to the silicon atom through any convenient linkage, for example an ≡Si-C-, ≡Si-O-Si-C- or ≡Si-O-C- linkage. Preferred organic polymers (B) include organic polyethers which have been modified to incorporate silyl groups having oximo, alkoxy (including alkoxy alkoxy) or alkenyloxy groups attached thereto (hereinafter referred to as modified polyethers).

Numerous methods of preparing organic polymers (B) by introducing hydrolysable silyl groups into the molecular chain have been proposed in the literature. For example, a silane of the general formula $X_{(3-b)}R_bSiH$ may be reacted with a polyether having groups including -C=C- bonds. There may be one or more -C=C- bonds present in the polyether molecule and these may be located as terminal groups on the chain or as pendant groups. In the case where there is one terminal -C=C- group, the other terminal group or groups may be hydroxyl. Materials of this general type have been mentioned in several patent specifications of which the earliest known to the applicant is G.B. 1 058 385. G.B. 1 058 385 specifies various hydrolysable groups, namely hydrocarbonoxy, halohydrocarbonoxy, acyloxy, halogenated acyloxy, primary, secondary or tertiary amino radical in which the substituents are hydrocarbon or halohydrocarbon radicals or a diorgano substituted isocyanoxy radical of the general formula $R_xR_yC{=}N{-}O{-}$ in which $R_x$ and $R_y$ are the same or different and are each a hydrocarbon or halohydrocarbon radical. Numerous subsequent proposals for materials and methods of making them have been described in the art. These proposals include methods of preparing organic polymers (B) by introducing hydrolysable silyl groups into the molecular chain which include, for example, those in which

(1) a monomer having an epoxy group and a silicon containing hydrolysable group e.g. γ-glycidoxypropylmethyldimethoxysilane or γ-glycidoxytrimethoxysilane, is copolymerised with an alkylene oxide e.g. propylene oxide or ethylene oxide to produce a polyether having a hydrolysable silicon containing group in the side chains; (2) a polyoxyalkyleneglycol such as polyoxypropylene polyol or polytetramethylene diol is reacted with a compound having a functional group e.g. an isocyanato group, capable of reacting with a hydroxyl group of the polyoxyalkylene polyol and having a silicon containing hydrolysable group, thereby introducing a hydrolysable silicon containing group into the polymer chain end; and (3) a polyisocyanate compound is reacted with a hydroxyl group of a polyoxyalkylene polyol as in (2) to produce a compound having an isocyanato group and the produced compound reacted with a compound having both a silicon containing hydrolysable group and a group capable of reacting with the isocyanato group such as a carboxyl, hydroxyl, mercapto or amino group, thereby introducing a hydrolysable silicon containing group into the polymer chain end.

The polymers (B) used in the present invention are at least difunctional and include units $-SiR_{(3-b)}X_b$ as terminal units. They may have the general formula $X_bR_{(3-b)}Si\text{-}Z\text{-}SiR_{(3-b)}X_b$ wherein Z represents a divalent organic polymeric chain which incorporates from 5 to 350 oxyalkylene units and is linked to the silicon atoms by any convenient linkage as aforesaid, R represents a methyl or an ethyl group, X represents an alkoxy, alkoxyalkoxy, alkenyloxy or oximo group, and b has a value of 1 or 2. A typical example of such modified polyether in which the chain Z is linked to the silicon atoms through an ≡Si-C-linkage is according to the formula

$$H_3C\text{-}\underset{X}{\overset{X}{Si}}\text{-}(CH_2)_3\text{-}(O\text{-}\underset{CH_3}{CH}\text{-}CH_2\text{-})_n\text{-}O\text{-}(CH_2)_3\text{-}\underset{X}{\overset{X}{Si}}\text{-}CH_3$$

wherein n has a value from 5 to 350 and preferably greater than 30 and less than 180.

Prior art methods of preparing modified polyethers of which applicant is aware are directed to preparation of polymers in which the hydrolysable silyl group is attached to the organic polymer molecular chain through a linkage other than ≡Si-O-C, for example a silicon-carbon bond. See, for example, E.P. 159 605, U.S. 4,631,322, U.S. 4,873,272, U.S. 4,847,357 and U.S. 4,786,667. It appears to have been generally believed that modified polyethers in which the silyl end cap is attached to the molecular chain through an ≡Si-O-C bond are not sufficiently hydrolytically stable for use in cured compositions which are intended to be exposed to the elements for years. Surprisingly, we have now found that compositions according to the present invention give satisfactory performance for many applications even when the modified polyether is one in which the hydrolysable silyl group is attached to the polymer through an ≡Si-O-C bond, provided that the hydrolysable group X is an alkoxy, alkoxyalkoxy, alkenyloxy or oximo group; of these, the oximo group is much preferred.

Certain modified polyethers in which the silyl end cap is attached to the molecule through an ≡Si-O-C bond may be made by a simple procedure which requires only small input of energy to the reaction system. These modified polyethers are according to the general formula $X_bR_{(3-b)}Si\text{-}Z\text{-}SiR_{(3-b)}X_b$ wherein Z represents a divalent organic polymeric chain which consists of from 5 to 300 oxyethylene, oxypropylene or oxybutylene units and which is linked to each silicon atom by an oxygen atom, R represents a hydrocarbon group as aforesaid, for example an alkyl group for example methyl, ethyl or propyl, an alkenyl group for example vinyl, allyl or hexenyl, an aryl group for example phenyl, or a cycloaliphatic group for example cyclohexenyl group, X represents an alkoxy, alkoxyalkoxy, alkenyloxy or oximo group, and b has a value of 1, 2 or 3. Certain alkoxy silanes are capable of reacting with polyoxyalkylene glycols at room temperature when mixed in presence of a catalyst. In its simplest form therefore, the reaction may be carried out at room temperature between a hydroxypolyoxyalkylene and a silane having from 2 to 4 hydrolysable groups including oximo, alkoxy (including alkoxyalkoxy) or alkenyloxy silane groups, with elimination of hydrolysis product e.g. ketoxime or alcohol. The reverse reaction is also possible at room temperature in presence of certain materials, for example those containing primary or secondary amino nitrogen atoms so that such materials (which might otherwise be selected for use as, for example adhesion promoters or catalysts) preferably, are not included in compositions according to the invention which include these Si-O-C linkage containing polymers and which are intended to be exposed to moisture.

Organic polymers (B) in which the chain Z is linked to the silicon atoms by an oxygen atom to form an ≡Si-O-C-linkage may be made by bringing about reaction between the organic polymer and a suitable silane, if necessary in presence of a condensation catalyst. Typical examples of suitable silanes are the di-, tri- and tetra-oximo silanes, the di-, tri- and tetra- alkoxy silanes, the alkenyloxy silanes and the mixed oximo-alkoxysilanes. Examples of these silanes are methyltrioximosilane, vinyltrioximosilane, tetraoximosilane, methyltrialkoxysilane, vinyltrialkoxysilane, methyldioximoalkoxysilane, vinyldioximoalkoxysilane, trioximoalkoxysilane, oximotrialkoxysilane, diaminodioximosilane, isopropenyloxysilane, 1-ethyl-2-methylvinylsilane. The hydroxypolyoxyalkylene used to prepare organic polymer (B) for use in the present invention comprises one or more liquid dihydroxy materials having a viscosity in the range 100 to 1100 mPa.s and having oxyethylene, oxypropylene or oxybutylene units in its molecular chain. Where low raw material cost, adhesion, and flexibility of the cured composition are desirable, we prefer to employ an α,ω dihydroxy polyoxypropylene glycol of molecular weight of about 2000 to about 4000 to make the modified polymers.

Typically these organic polymers (B) may be prepared according to the scheme

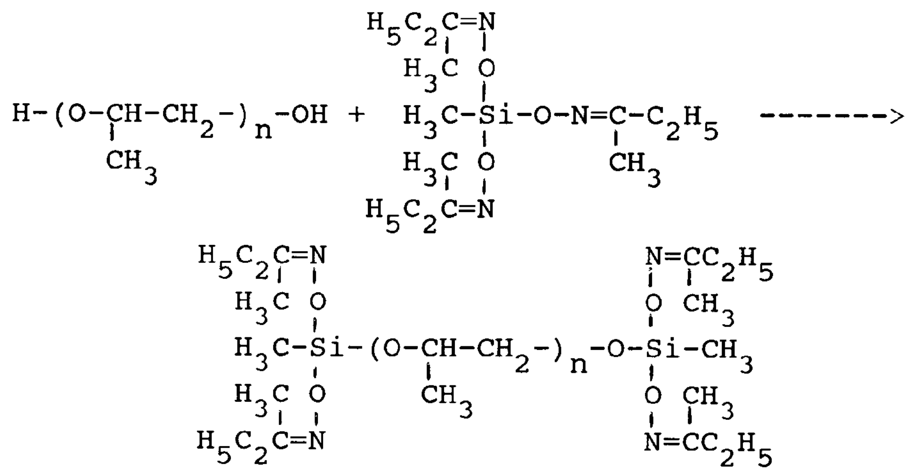

The reaction between the hydroxy terminated organic polymer and the silane may be brought about by admixture of the materials at room temperature. The reaction involving the oximo silanes requires no catalyst to proceed at an acceptable rate, but that with the alkoxy silanes generally benefits from presence of a catalyst for example dodecylbenzene sulphonic acid. The reaction may be brought about in a separate process or may be carried out in situ during preparation of the curable composition. A typical example of such a modified polyether for use in the invention is according to the general formula

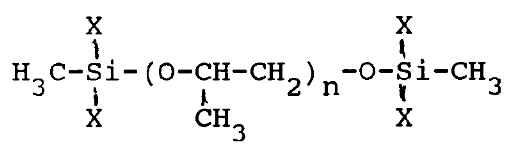

where n has a value in the range 5 to 350 so that the oxypropylene chain has a molecular weight in the range of about 300 to about 20,000. Preferred materials are those wherein n has a value less than 180, for example in the range 5 to 70 (i.e. a molecular weight in the range 300 to 4000) and a viscosity of about 50 to about 1100 mPa.s. The most preferred materials have oxypropylene chains of molecular weight of about 2,000. The groups X may be the same or different and are selected from oximo, alkoxy, alkoxyalkoxy and alkenyloxy. These polymers cure upon exposure to moisture by way of hydrolysis of the hydrolysable groups X.

In a composition according to the invention component (C) is a silane of the formula $X'_dSiR_{(4-d)}$ in which the groups X' are hydrolysable groups for example selected from alkoxy, oximo, acyloxy and alkenyloxy. The groups X' may thus be the same as or different from the groups X of the organic polymer (B). When the composition includes organic polymer (B) as just above described i.e. having the chain Z linked to the silicon atoms through an oxygen atom of an ≡Si-O-C- linkage the groups X' are preferably selected from alkoxy, oximo, acyloxy and alkenyloxy. Polymer (B) and component (C) when present are effective in converting polydiorganosiloxane (A) to the solid elastic state at normal ambient or slightly elevated temperatures, usually about 15 to 30°C. Polydiorganosiloxane (A) organic polymer (B) and silane (C) thus comprise a room temperature vulcanising composition.

The compositions of this invention may contain finely divided reinforcing and/or extending filler (E). Examples of such fillers include crushed quartz, aluminium oxide, calcium carbonates, which may be of the ground or precipitated types, microballoons and clays. The fumed and precipitated silicas commonly employed in silicone sealant compositions are not generally preferred for use in the preferred compositions of the present invention. The fillers used may be pretreated to facilitate processing e.g. calcium carbonate may be treated by coating with calcium stearate and the reinforcing silicas when used may be treated with organosilicon compounds. 100 to 800 parts by weight of the filler per 100 parts by weight of the polymer (A) may be present

depending on the physical or other properties desired in the cured elastomer.

In those compositions according to the invention which employ organic polymer (B) having the chain Z linked to the silicon atoms through an oxygen atom of an ≡Si-O-C-linkage and an oximo silane, it is not necessary to employ a catalyst to achieve a room temperature cure in an acceptable time period. When used, the catalyst (D) for promoting condensation reaction between the components (A), (B) and (C) in presence of moisture from the atmosphere is selected from the group consisting of titanium complexes and tin compounds. It should be noted that tin compound catalysts catalyse the hydrolysis of materials containing the grouping ≡Si-O-C and condensation to form siloxanes. For those compositions according to the invention which contain polymers (B) in which the group $-SiR_{(3-b)}X_b$ is attached to the oxyalkylene chain through an ≡Si-O-C bond one may prefer to employ a titanium complex as catalyst whereas for other compositions according to the invention either type of catalyst may be employed. Examples of suitable titanium complexes include titanium diisopropoxy di-(ethyl acetoacetate), titanium diisopropoxy di(acetyl acetonate) and titanium tetra alkoxides where the alkoxide is butoxy or propoxy. The titanium complex may be employed in a proportion of approximately 0.2 part by weight per 100 parts by weight of the polyorganosiloxane (A). Examples of suitable tin compounds include dibutyl tin dilaurate. The tin compounds may be employed in a proportion of approximately 0.02 to 0.2 parts by weight per 100 parts by weight of the polyorganosiloxane (A).

If desired a composition according to the invention may include one or more additives for modifying the elastomeric and other properties of the composition. For example, there may be incorporated into the composition plasticisers, extenders, pigments such as titanium dioxide, carbon black and iron oxide, and processing and adhesion promoting additives. Plasticisers and extenders which may be employed include the organic phthalate esters and non-functional end-capped polyalkylene oxides as well as the trimethylsilyl end capped polydimethylsiloxane fluids (PDMS). These materials may be employed in proportions of up to 150 parts by weight per 100 parts by weight of the polyorganosiloxane (A). Adhesion promoting additives which may be employed for improving the adhesion of the cured composition to glass, metal or other substrates include, for example, epoxy, tertiary amino and mercapto functional alkoxysilanes and certain reaction products and or mixtures thereof. Preparation of the compositions can be effected by known mixing techniques. They may be formulated into single package or multiple package configurations as required. The compositions of this invention cure at ambient, or slightly elevated, temperatures to provide seals having good elastomeric properties of low modulus.

A composition according to the invention comprises 100 parts by weight of the polyorganosiloxane (A) and 55 to 300 parts by weight of the organic polymer (B). Compositions which include less than 55 parts by weight of the organic polymer per 100 parts of the polyorganosiloxane do not show particularly good paintability whereas proportions in excess of 300 parts organic polymer per 100 polyorganosiloxane do not contribute to further increased paint-ability.

Those compositions which include an organic polymer (B) in which the oxyalkylene chain is linked to the terminal silicon-containing units by an ≡Si-O-C- bond in a proportion of more than 120 parts by weight per 100 parts by weight of the polyorganosiloxane (A) find use as sealant compositions in those locations where they are not exposed to conditions which promote hydrolysis for example as an interior sealant in dwellings. Where optimum hydrolysis resistance and initial paintability of such compositions is desired, we prefer to employ from 70 (more preferably from 77) to 120 parts of the organic polymer (B) in which the oxyalkylene chain is linked to the terminal silicon containing units by an ≡Si-O-C- bond per 100 parts by weight of the polyorganosiloxane (A). Those compositions which employ a comparatively low proportion of filler and no, or substantially no, plasticiser demonstrate good paint-ability. Those compositions which employ a comparatively high proportion of filler demonstrate good initial paintability even if they also include a comparatively high proportion of plasticiser. The incorporation of plasticizer facilitates a high extrusion rate of the uncured composition and low modulus of the cured composition despite the high filler load.

The following Examples, in which the parts and percentages are expressed by weight, have been selected to illustrate the invention.

A dimethoxymethylsilyl end-blocked polyoxypropylene (Polymer B1) having alkoxysilyl end caps attached to a polyoxyalkylene chain by Si-C bonds and according to the general formula

$$H_3C-\underset{OCH_3}{\overset{OCH_3}{\underset{|}{\overset{|}{Si}}}}-(CH_2)_3-(O-\underset{CH_3}{\underset{|}{CH}}-CH_2-)_n-O-(CH_2)_3-\underset{OCH_3}{\overset{OCH_3}{\underset{|}{\overset{|}{Si}}}}-CH_3$$

wherein n has a value of 120 to 180 was prepared by hydrosilylation of an allyl end-blocked polyoxyalkylene

with dimethoxymethylsilane.

A dioximomethylsilyl end-blocked polyoxypropylene (Polymer B2) having oximosilyl end caps attached to a polyoxyalkylene chain by Si-O-C bonds and according to the general formula

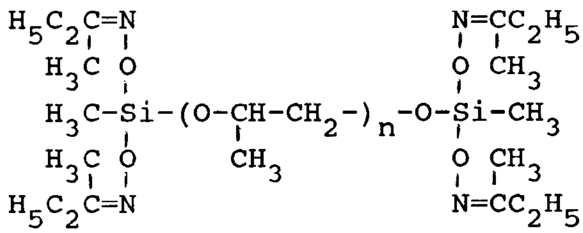

was prepared by mixing a polyoxyalkylene glycol of molecular weight about 4,000 with a stoichiometric excess of methyltrioximo silane. The mixture was allowed to react at room temperature for 30 minutes.

Corresponding alkoxysilyl functional Polymer B3 having alkoxysilyl end caps attached to a polyoxyalkylene chain by Si-O-C bonds was prepared by mixing polyoxyalkylene glycol with an alkoxysilane in presence of dodecylbenzene sulfonic acid as catalyst. The mixture was allowed to react at 60°C for about 6 hours to reach a certain level of polyalkylene glycol end-capping. The catalyst was deactivated by neutralization with an amine or calcium oxide.

Example sealant compositions were prepared from ingredients in proportions by weight shown in the following Tables. In the Tables the ingredients referred to are as follows:

The Silicone Polymer used was a silanol terminated polydiorganosiloxane according to the general formula $HO(R_2SiO)_sH$ in which each R represents a methyl group and s has a value such that the viscosity of the polymer is about 50,000 $mm^2/s$ at 25°C. Oximosilane 1 was a mixture of 80% methyl-trioximo and 20% methyldioximomonoalkoxy silane. Methoxy-silane 1 was methyltrimethoxy silane. The plasticiser used was dioctyl phthalate. Filler 1 was a precipitated calcium carbonate. Filler 2 was a ground calcium carbonate. Filler 3 was titanium dioxide. The UV stabiliser was 2,4-bis(octylthio)- methyl-o-cresol. The catalyst used was stannous octoate. The adhesion promoter used was a blend of 50 parts of γ-aminopropyltrimethoxysilane and γ-glycidoxypropyltrimethoxysilane.

The example sealant compositions were prepared by standard compounding techniques. The Polymer (B) was first charged to a mixer, followed by loading of the Silicone Polymer. They were mixed together for 2 minutes prior to the sequential addition of fillers. Further mixing was pursued for 10 to 20 minutes under vacuum and then other ingredients, for example crosslinker, UV stabilizer, anti-oxidant, adhesion promoter, catalyst and plasticizer were added and mixing continued for 2 to 5 minutes under vacuum. The sealant composition was recovered and packed in cartridges and tested after 1 week room temperature ageing.

The rate of extrusion of the sealant from the cartridge was determined according to MIL-S-8802D and recorded as Extrusion Rate. The Tensile Strength, Elongation at Break, Modulus at 100% extension, Hardness (Shore A) and reversion in warm water at 50°C were measured according to ASTM D412 using cured strips or slabs of the compositions. For the assessment of the paintability, the following test was used. Sealant composition was extruded to a depth of 4mm into a gutter formed from wood. The sealant composition was allowed to cure for one week at room temperature. The sealant was then painted with an oil based paint based on alkyd resin or a water based paint based on latex or based on acrylic polymer emulsion. Spreading of the paint on the sealant surface was assessed by the observation of the formation of fish-eyes on the coating.

Values were ascribed as follows:

Good: no fish eye formed while paint was drying.

Poor: at least one fish eye formed while paint was drying.

The paint was left to "dry" for one week on the sealant surface. Those cases where the paint failed to cure or set fully are recorded in the Tables as "udp". The cured paint films were cut with a razor blade to prepare small squares. A piece of adhesive tape was then applied on the paint and removed quickly. The paint adhesion was determined by the number of paint squares left on the sealant after having removed the tape. The numbers of paint squares remaining on the sealant surface is recorded in the Tables.

## Example 1

The properties of example sealant compositions 1 and 2, made using Polymer B1 or Polymer B2, were compared using formulations as shown in Table 1. As can be seen from the Reversion test results given in Table 1 the second example sealant composition, which includes Polymer B1, showed good hydrolytic stability.

On the other hand it showed somewhat poorer paint adhesion than the first example composition which includes Polymer B2. Both example compositions showed excellent acrylic paint adhesion.

Example 2

The properties were examined of example sealant compositions 3 to 8 made using Polymer B2 with various ratios of Polymer B2 to Silicone Polymer in a formulation containing a large proportion of filler (ratio of Filler 1/Filler 2 = 1/1). As can be seen from the results recorded in Table 2 for example compositions 3, 4, 5 and 6, larger proportions of Silicone Polymer present in the composition have a dramatic effect on hydrolytic stability of the cured sealant composition. Hydrolytic stability analogous to that recorded in Example 2 with example composition 2 was obtained with those compositions using Polymer B2 in which the ratio of Polymer B2 to Silicone Polymer is close to 1, together with comparable or better paint adhesion. The results recorded for example compositions 5, 7 and 8, show the presence of the plasticiser is beneficial in these highly filled compositions for the development of paint adhesion.

Example 3

The properties were examined of example compositions 9 to 13. Example compositions 9 and 10 were made using different ratios of Polymer B2 to Silicone Polymer in a formulation containing no Filler 2. Example compositions 11 to 13 were made using different proportions of plasticizer and of the adhesion promoter (a blend of an aminosilane and an epoxysilane) in formulations containing filler in proportions similar to those of example compositions 9 and 10. As can be seen from Table 3, example composition 10 has better hydrolytic stability than example composition 9. Example compositions 12 and 13, demonstrate a desirable blend of properties including hydrolytic stability and paintability spreading and adhesion.

Table 1

| Ingredient | Example Composition 1 | Example Composition 2 |
|---|---|---|
| Polymer B1 | 0 | 67 |
| Polymer B2 | 67 | 0 |
| Silicone Polymer | 33 | 33 |
| Plasticiser | 50 | 50 |
| Filler 1 | 120 | 120 |
| Filler 2 | 80 | 80 |
| Filler 3 | 20 | 20 |
| UV Stabiliser | 1 | 1 |
| Oximosilane 1 | 3 | 0 |
| Methoxysilane | 0 | 3 |
| Catalyst | 0 | 3 |
| Laurylamine | 0 | 1 |
| Physical Properties | | |
| Extrusion (g/min) | 2190 | 256 |
| Tensile Strength (MPa) | 0.5 | 1.1 |
| Elongation at break (%) | 363 | 647 |
| Modulus at 100% (MPa) | 0.3 | 0.3 |
| Hardness (Shore A) | 20 | 16 |
| Reversion | | |
| (1 week 50°C water) | Yes | No |
| Paintability:Spreading | | |
| Latex | Good | Good |
| Acrylic | Poor | Good |
| Alkyd | Good | Good |
| Paintability:Adhesion | | |
| Latex | 20 | 0 |
| Acrylic | 100 | 100 |
| Alkyd | udp | udp |

Table 2

| Ingredient | Example Composition | | | | | |
|---|---|---|---|---|---|---|
| | 3 | 4 | 5 | 6 | 7 | 8 |
| Polymer B2 | 67 | 60 | 55 | 50 | 55 | 55 |
| Silicone Polymer | 33 | 40 | 45 | 50 | 45 | 45 |
| Plasticiser | 50 | 50 | 50 | 50 | 30 | 10 |
| Filler 1 | 120 | 120 | 120 | 120 | 100 | 100 |
| Filler 2 | 120 | 120 | 120 | 120 | 100 | 100 |
| Filler 3 | 20 | 20 | 20 | 20 | 20 | 20 |
| UV Stabiliser | 1 | 1 | 1 | 1 | 1 | 1 |
| Oximosilane 1 | 3 | 3 | 3 | 3 | 3 | 3 |
| Physical Properties | | | | | | |
| Extrusion Rate (g/min) | 1770 | 1362 | 318 | 434 | 224 | 80 |
| Tensile Strength (MPa) | 0.38 | 0.22 | 0.21 | 0.45 | 0.5 | 0.9 |
| Elongation at break (%) | 239 | 141 | 270 | 225 | 371 | 365 |
| Modulus at 100% (MPa) | 0.33 | 0.22 | 0.15 | 0.36 | 0.3 | 0.7 |
| Hardness (Shore A) | 19 | 7 | 8 | 20 | 16 | 31 |
| Reversion | | | | | | |
| (1 W 50°C Water) | Yes | Some | No | No | No | No |
| Paintability:Spreading | | | | | | |
| Latex | Good | Good | Good | Good | Good | Good |
| Acrylic | Good | Good | Good | Good | Good | Good |
| Alkyd | Good | Good | Good | Good | Good | Good |
| Paintability:Adhesion | | | | | | |
| Latex | 20 | 100 | 100 | 90 | 20 | 0 |
| Acrylic | 100 | 100 | 100 | 100 | 100 | 100 |
| Alkyd | udp | udp | udp | udp | udp | udp |

Table 3

| Ingredient | Example Composition | | | | |
|---|---|---|---|---|---|
| | 9 | 10 | 11 | 12 | 13 |
| Polymer B2 | 67 | 50 | 55 | 55 | 55 |
| Silicone Polymer | 33 | 50 | 45 | 45 | 45 |
| Plasticiser | 50 | 50 | 30 | 0 | 0 |
| Filler 1 | 120 | 120 | 120 | 120 | 120 |
| Filler 2 | 0 | 0 | 0 | 0 | 0 |
| Filler 3 | 40 | 40 | 20 | 20 | 20 |
| UV Stabiliser | 1 | 1 | 1 | 1 | 1 |
| Oximosilane 1 | - | - | - | - | - |
| Adhesion Promoter | 0 | 0 | 0.27 | 0 | 0.27 |
| Physical Properties | | | | | |
| Extrusion (g/min) | 570 | 220 | 50 | 31 | 12 |
| Tensile Strength (MPa) | 1.0 | 0.5 | 0.4 | 0.5 | 0.4 |
| Elongation at break (%) | 481 | 347 | 513 | 281 | 255 |
| Modulus at 100% (MPa) | 0.4 | 0.3 | 0.2 | 0.4 | 0.3 |
| Hardness (Shore A) | 24 | 13 | 10 | 18 | 24 |
| Reversion | | | | | |
| (1W 50°C Water) | Yes | No | No | No | No |
| Paintability:Spreading | | | | | |
| Latex | Poor | Poor | Poor | Good | Good |
| Acrylic | Good | Good | Poor | Good | Good |
| Alkyd | Good | Good | Poor | Good | Good |
| Paintability:Adhesion | | | | | |
| Latex | 0 | 0 | 100 | 94 | 100 |
| Acrylic | 100 | 0 | 100 | 100 | 100 |
| Alkyd | udp | udp | udp | udp | udp |

## Claims

1. A composition capable of crosslinking in presence of moisture from the atmosphere comprising a mixture or a reaction product of (A) 100 parts by weight of a polyorganosiloxane having a viscosity in the range 150 to 500,000 mPa.s at 25°C comprising units of the general formula $R_aSiO_{(\frac{3-a}{2})}$ and not less than two units of the general formula $(HO)_bSiR_cO_{(\frac{3-(b+c)}{2})}$, (B) from 55 to 300 parts by weight of an organic polymer having oxyalkylene units in its molecular chain and not less than two groups $-SiR_{(3-b)}X_b$, (C) from 0 to 25

parts by weight of one or more silanes of the general formula $X'_dSiR_{(4-d)}$, (D) a catalyst for promoting condensation reaction between the components (A), (B) and (C) in presence of moisture from the atmosphere selected from the group consisting of titanium complexes and tin compounds wherein each R is the same or different and is a monovalent hydrocarbon group, X is selected from the group consisting of alkoxy, alkoxyalkoxy, alkenyloxy and oximo, X' is a hydrolysable group, a has the value 0, 1, 2 or 3, b has the value 1, 2 or 3, c has the value 0, 1 or 2 and d has the value 2, 3 or 4.

2. A composition according to Claim 1 wherein the organic polymer (B) is according to the formula

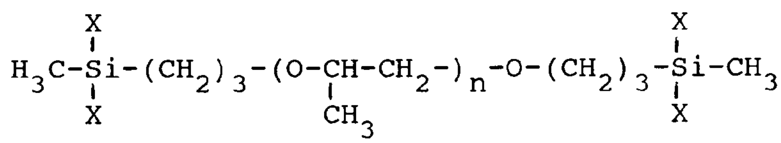

wherein n has a value from 5 to 350.

3. A composition according to Claim 1 wherein the organic polymer (B) is according to the general formula $X_bR_{(3-b)}$-Si-Z-$SiR_{(3-b)}X_b$ wherein Z represents a divalent organic polymeric chain comprising from 5 to 350 oxyethylene, oxypropylene or oxybutylene units linked to each silicon atom by an oxygen atom, each R represents a monovalent hydrocarbon group and X represents an alkoxy, alkoxyalkyl, alkenyloxy or oxime group and b has a value of 1, 2 or 3.

4. A composition according to Claim 3 wherein the organic polymer (B) is according to the general formula

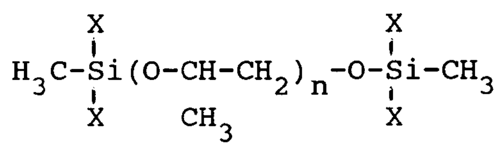

where n has a value in the range 5 to 180.

5. A composition according to Claim 4 wherein the organic polymer (B) is present in a proportion of from 70 to 120 parts by weight per 100 parts by weight of the polyorganosiloxane (A).

6. A composition according to Claim 1 wherein the polyorganosiloxane (A) is at least substantially linear and has a viscosity in the range 50,000 to 150,000 mPa.s at 25°C.

7. A composition according to Claim 1 comprising from 100 to 800 parts by weight of finely divided filler (E).